# EUROPEAN PATENT SPECIFICATION

(11) **EP 2 337 907 B1**
(45) Date of publication and mention of the grant of the patent: **10.06.2015**
(21) Application number: 09782011.2
(22) Date of filing: 19.08.2009
(51) Int. Cl.: E04B 2/78, F16B 7/18, E04B 1/24

(54) **A SUPPORT STAND**
TRAGSTÄNDER
PIED DE SUPPORT

(30) Priority: 21.10.2008 GB 0819251
(43) Date of publication of application: 29.06.2011
(73) Proprietor: Icon Office Design Ltd, Featherstone, Yorkshire WF7 6ER (GB)
(72) Inventor: KING, Gary, Featherstone Yorkshire WF7 6ER (GB)
(74) Representative: Paton, David William
(86) International application number: PCT/EP2009/060749
(87) International publication number: WO 2010/046150

(56) References cited:
- EP-A- 0 514 862
- DE-A1- 4 016 380
- DE-U1- 29 615 033
- FR-A- 1 361 398
- FR-A- 1 550 451
- FR-A1- 2 519 388
- FR-A1- 2 802 280
- FR-A5- 2 194 250
- US-A- 1 939 598
- US-A- 5 899 025

## Description

The present invention relates to a coupling for fixedly mounting an upstanding support member to a mounting element.

Support stands are generally known for supporting partition panels. A conventional arrangement comprises an upstanding central support stand with a plurality of longitudinal slots formed therein, into which mounting points of a partition panel are slid such that the partition panels are fixedly mounted thereto. The partition panels are then supported by the floor and held in an upstanding position by the support stand.

A conventional support stand generally comprises a base and a plurality of upstanding support members to which the partition panels are mounted with decorative panels clipped between adjacent support members. Such a support stand is also used to provide a solution for supplying power and data communication outlets. Power and communication cables are run up through the support stand to power and data outlets mounted to the decorative panels. A disadvantage of conventional support stands is that the upright support members are prone to twist relative to each other when a heavy component is mounted thereto and so are not strong enough to support a heavy component.

Patent application FR 2 194 250 A5 and patent FR 2 802 280 A1 disclose couplings for uprights with splaying arms and actuating biasing members. Patent FR 1 550 451 A discloses a similar coupling with all the features of the preamble of claim 1.

The present invention seeks to provide a coupling which overcomes or substantially alleviates the problems discussed above, among others.

According to the invention, there is provided a coupling for fixedly mounting an upstanding elongate support member to a mounting element, comprising a female portion on a support member with a pair of facing parallel slots, a male portion on a mounting element with a pair of opposing arms extending from said mounting element, each arm having a flange configured to be disposed in one of said slots, a biasing member disposed between said arms such that, when the biasing member is drawn towards said support member, the arms splay laterally away from each other to fixedly engage said flanges in said respective slots and a fastening member extendable through said support member to threadingly engage with the biasing member such that, when the fastening member is rotated, the biasing means is drawn towards said support member.

Preferably, the arms each comprise a locating surface against which the biasing member acts, said locating surfaces converging inwardly towards the end of the arm.

Advantageously, each locating surface is arcuate and the biasing member is cylindrical and locates against said arcuate locating surfaces between the arms.

Preferably, a fastening member extends through said support member and threadingly engages with the biasing member such that, when the fastening member is rotated, the biasing means is drawn towards said support member.

According to another aspect of the invention, there is provided a system for fixedly mounting components comprising a support stand with a plurality of upstanding elongate support members and a mounting element to fixedly mount the support members to each other in a spaced parallel relationship, and wherein a coupling fixedly mounts each support member to a mounting element.

Embodiments will now be described, by way of example only, with reference to the accompanying drawings, in which:
FIGURE 1 shows a perspective view of a support stand;
FIGURE 2 shows a top plan view of a support member of the support stand shown in Figure 1;
FIGURE 3 shows a top plan view of a mounting element of the support stand shown in Figure 1, with four radially extending spars, for use with the support member shown in Figure 2;
FIGURE 4 shows a top plan view of a mounting element of the support stand shown in Figure 1, with three radially extending spars;
FIGURE 5 shows a top plan view of a support member of the support stand shown in Figure 1, for use with the mounting element with three radially extending spars shown in Figure 4;
FIGURE 6 shows a top plan view of a decorative panel of the support stand shown in Figure 1;
FIGURE 7 shows an exploded view of an upper end of the support stand shown in Figure 1;
FIGURE 8 shows a top plan view of the support stand shown in Figure 1;
FIGURE 9 shows an exploded perspective view of a support stand shown in Figure 1; and
FIGURE 10 shows a perspective view of a lower end of the support stand shown in Figure 1.

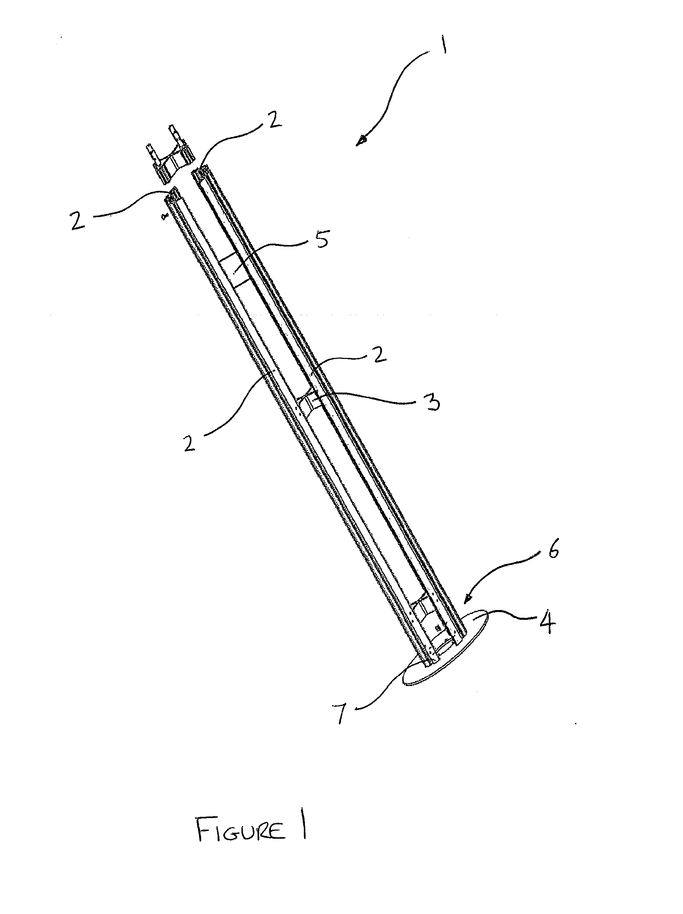

Referring now to the drawings, there is shown in Figure 1 a support stand 1. The support stand 1 comprises four upstanding elongate support elements 2, mounting elements 3, a base 4 and a support plate 5.

The upstanding elongate support members 2 extend parallel to each other in a longitudinal direction and are disposed in a spaced relationship from each other by the mounting elements 3 which are located between the upstanding support members 2. The upstanding support members are spaced in a parallel relationship from each other, equidistant about a central longitudinally extending axis by the support elements 2. In the present embodiment four upstanding support elements 2 are shown together with three mounting elements 3, but it will be appreciated that the arrangement is not limited thereto, as will become apparent hereinafter.

The base 4 is disposed at a bottom end 6 of the support stand 1, and a lower end 7 of each upstanding support member 2, locates thereagainst and is fixedly mounted thereto, as will be described below. The support plate 5 is mounted between a pair of adjacent upstanding support members 2.

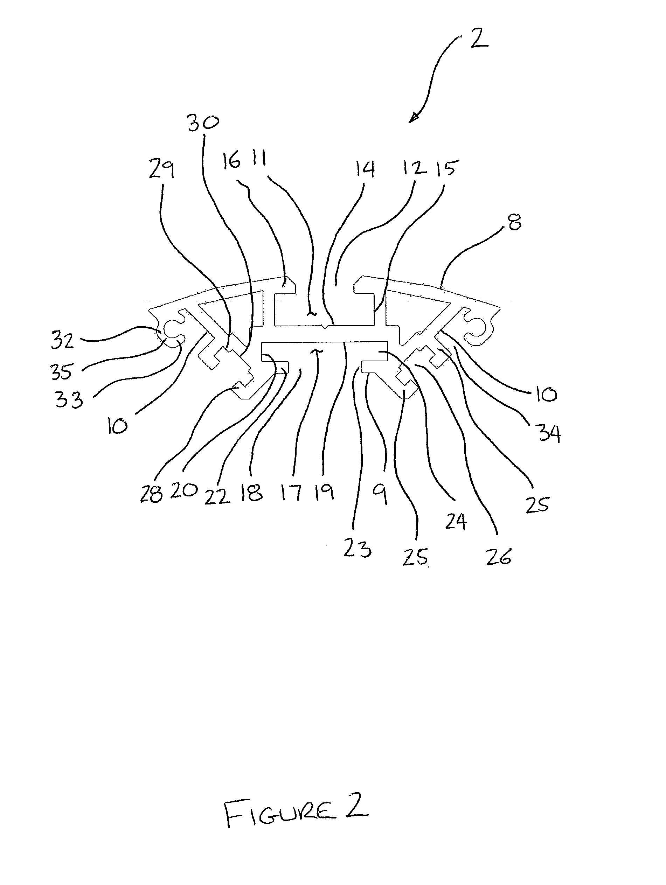

One of the upstanding support members 2 is shown in Figure 2, and comprises an outer surface 8, an inner surface 9 and a pair of elongate side surfaces 10, extending from the outer surface 8 to the inner surface 9. The pair of side surfaces 10 are recessed behind the outer surface 8 and converge inwardly towards the inner surface 9. Each upstanding support member is formed from an extruded aluminium material, although it will be appreciated that the upstanding support members may be formed from any suitable material with the desired strength and lightweight properties. An advantage of using an aluminium extrusion is that the upstanding support members 2 can be easily cut to any desired length to define the length of the support post 1.

A longitudinally extending trough 11 is formed in each upstanding support member 2 with a trough opening 12 in the outer surface 8, and the trough 11 comprises a trough base 14 and trough sidewalls 15. Inwardly facing trough lips 16 extend longitudinally along the sidewalls 15 proximate to the trough opening 12.

A longitudinally extending recess 17 is formed in the inner surface 9 of each upstanding support member 2 and comprises a recess opening 18, a recess base 19 and recess sidewalls 20 extending from either side of the recess base 19. A pair of longitudinally extending mounting lips 22 extend from the recess sidewalls 20 with remote ends 23 which extend partially across the recess opening 18 to define a pair of facing mounting slots 24.

Each side surface 10 of the upstanding support member 2 comprises a pair of upright walls 25 extending longitudinally therealong to define a guide channel 26 therebetween. Each guide channel 26 is formed to receive an edge of the support plate 5 therein, as will become apparent hereinafter. A pair of channel lips 28 extend inwardly towards each other from an outer end of each upright wall 25. The guide channel 26 further comprises a channel base 29 and a longitudinally extending groove 30 is formed in the channel base 29. The channel lips 28 and the groove 30 aid the location of an edge of the support plate 5 in the respective channel 26.

A longitudinally extending locating sill 32 extends from an edge 33 of the outer surface 8, over the side surface 10 of the upstanding support member 2. The sill 32 comprises a ridge portion 35, and the sill 32 is turned back on itself to form a return portion 33 which faces one of the upright walls 25 to define a secondary channel 34 therebetween.

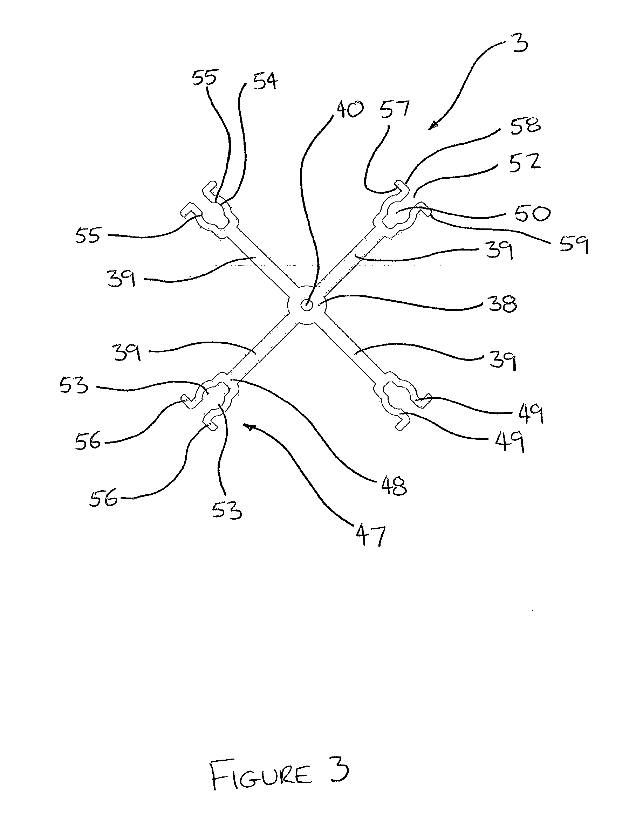

Referring now to Figure 3, one of the mounting elements 3 is shown comprising a central column 38 and four radially extending spars 39. The central column 38 defines a central axis and a hole 40 extends coaxially therethrough. Each radially extending spar 39 extends along the central column 38 and extends radially from the central column 38 at right angles to an adjacent spar 39, such that the four radially extending spars 39 are spaced equidistantly about the central column 38.

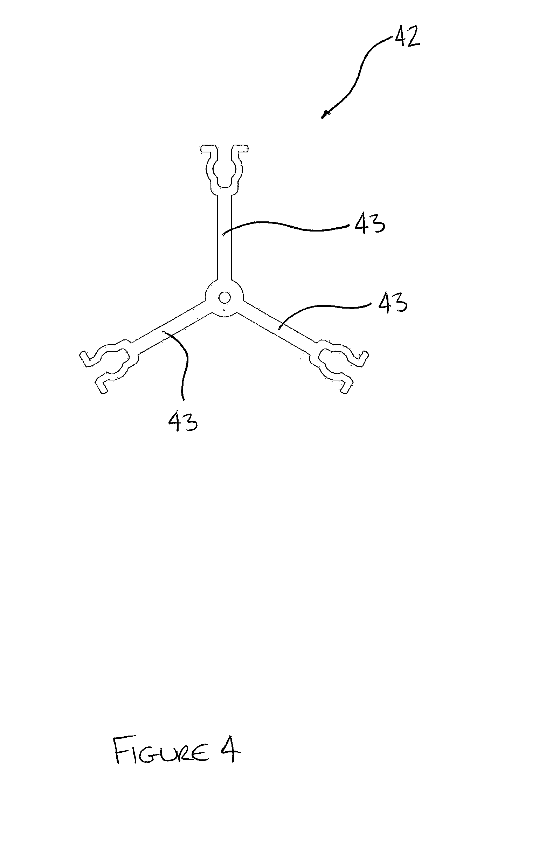

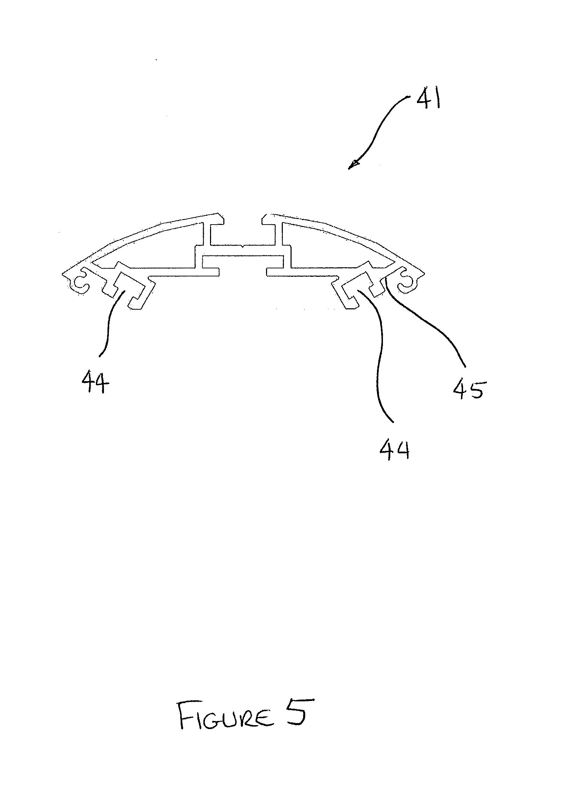

A corresponding upstanding support member 2 is mounted to the end of each radially extending spar 39, as will be explained in detail hereinafter. Although in this embodiment each mounting element comprises four radially extending spars, it will be appreciated that in an alternative embodiment the mounting element comprises any number of radially extending spars. For example, an alternative three spar mounting member 42 with three radially extending spars 43 is shown in Figure 4, wherein each spar 43 extends at an angle of 120 degrees relative to its adjacent spars 43, such that the spars 43 are disposed equidistant from each other. A corresponding upstanding support element 41 for attaching to the three spar mounting element 42 is shown in Figure 5, and each side surface 45 of the support element 41 is configured to extend parallel to a side surface 45 of an adjacent support member 41, so that the guide channels 44 formed thereon face each other to receive the support plate 5, as will become apparent hereinafter.

Each spar 39 comprises a male coupling portion 47 formed at an end 48 of each spar 39, remote to the central column 38. The male coupling portion 47 comprises a pair of spaced arms 49 extending from the remote end 48 of each spar 39. An alcove 50 is defined between the arms 49, and extends in a longitudinal axis parallel to the central axis of the mounting element 3 with an opening 52 defined between the arms 49.

An arcuate depression 53 is formed in each arm 49 and the arcuate depressions 53 face each other across the alcove 50. Each arcuate depression 53 comprises an arcuate wall 54, wherein a converging section 55 of each arcuate wall 54 converges inwardly towards the alcove opening 52. A flange 56 extends outwardly from an end of each arm 49. The flange 56 extends transversely from the arm 49 and comprises an inner face 57 facing the central column, an opposing outer face 58 and a flange end 59.

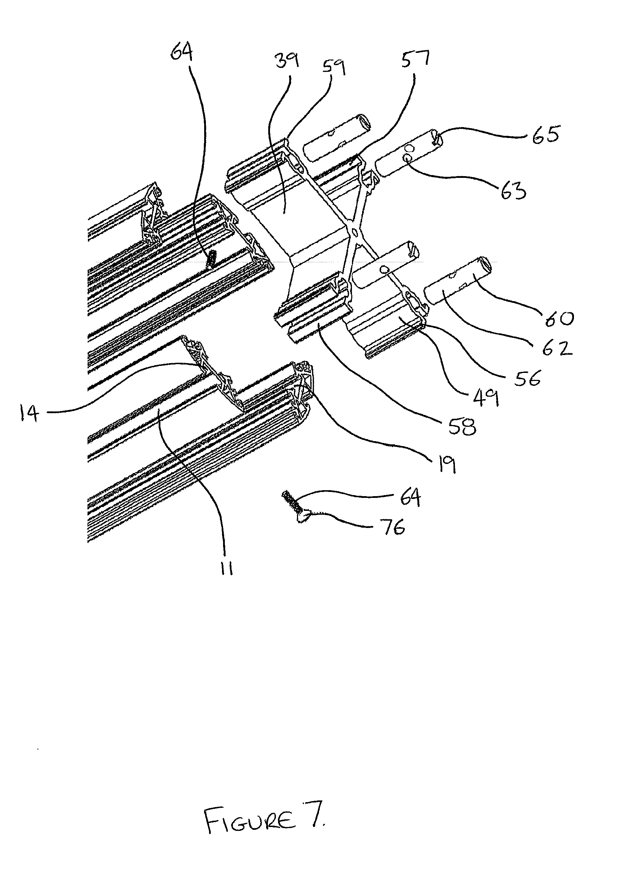

The support stand 1 further includes biasing members 60 (refer to Figure 7), wherein a biasing member 60 is associated with each male coupling portion 47. Each biasing member 60 is cylindrical and includes a cylindrical surface 62 and a diametrically extending threaded bore 63 formed therethrough between diametrically opposing sides of the biasing member 60 to receive a threaded fastener 64 (Figure 7). Each biasing member 60 between the spaced arms 49 in the arcuate depressions 53 such that the cylindrical surface 62 of the biasing member 60 locates against the arcuate wall 54 of each arcuate depression 53.

A tool engaging portion 65 is formed in one end of each biasing member 60 to align the biasing member 60 when it is received between the spaced arms 49 in the arcuate depressions 53.

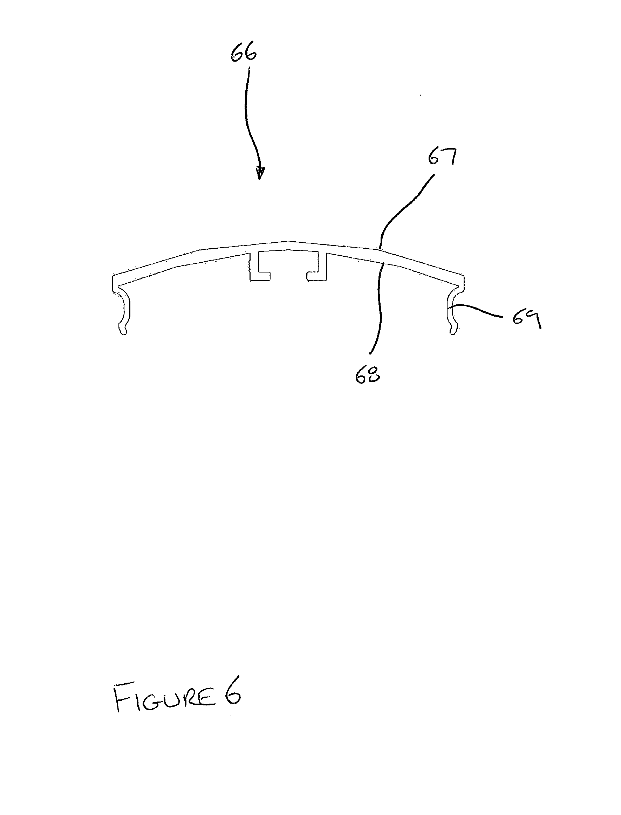

Referring to Figure 6, a decorative panel 66 is shown. The decorative panel 66 has an outer panel face 67 and an inner panel face 68. The outer panel face 67 is arcuate, and conforms to an outer arc of the outer surface 8 of each upstanding support member 2 to define a cylindrical shape when the support stand is assembled, as will become apparent hereinafter. The decorative panel 66 is formed from a resiliently deformable material, such as a plastic.

Resiliently deformable connecting portions 69 are disposed along opposing edges of the decorative panel 66, extending obliquely from the inner panel face 68.

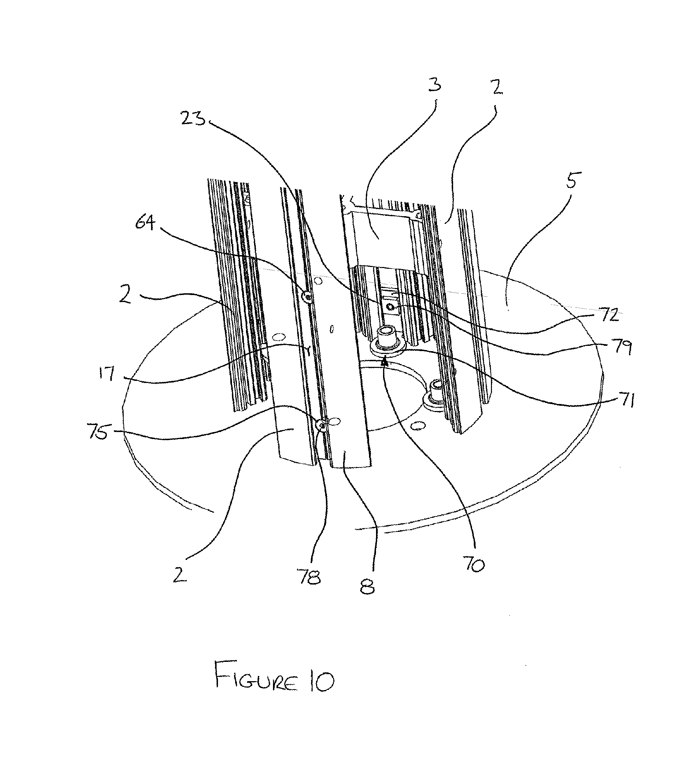

An L-shaped mounting bracket 70 is shown in Figure 10, for mounting each upstanding support member 2 to the base 4, as will be explained in detail hereinafter. The L-shaped mounting bracket 70 has a base portion 71 and an upstanding portion 72; each with fixing apertures (not shown) formed therethrough.

Although in the above embodiment the support stand 1 is described with the upstanding support members 2 being fixedly connected in a spaced arrangement by the base 4 and a plurality of mounting elements 3, it will be understood that in another embodiment, the base 4 is absent and the upstanding support members 2 are fixedly connected by a pair of mounting elements 3, or a plurality thereof.

The recess 17 formed in the support member 2, the arms 49 on the remote end 48 of each spar 39, the cylindrical biasing member 60 and the threaded fastener 64 form a coupling for fixedly mounting one of the upstanding support members 2 to a respective mounting element 3, as will be explained below.

The male coupling portion 47 is configured to fixedly engage with the mounting slots 24 formed on the support member 2 which form a female coupling portion 73, as will become apparent hereinafter.

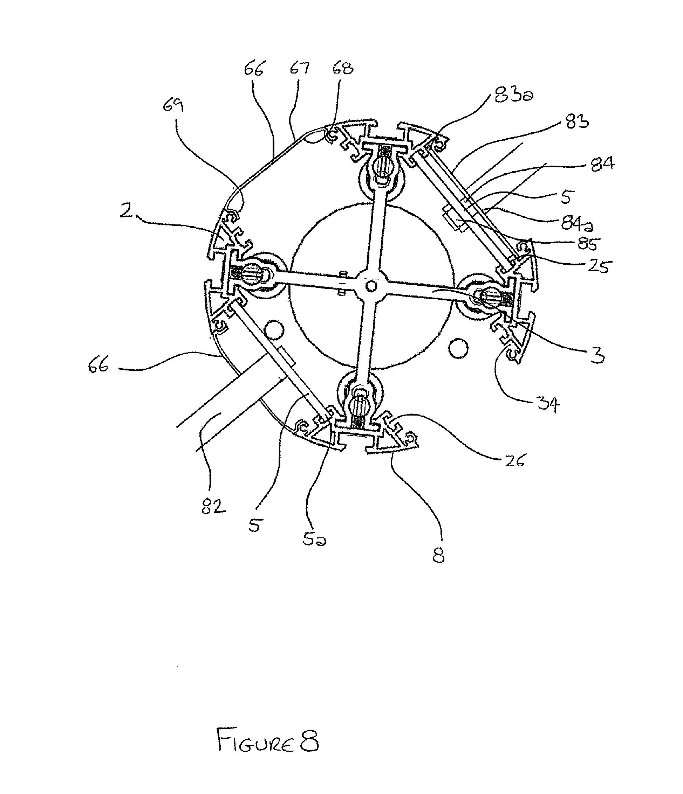

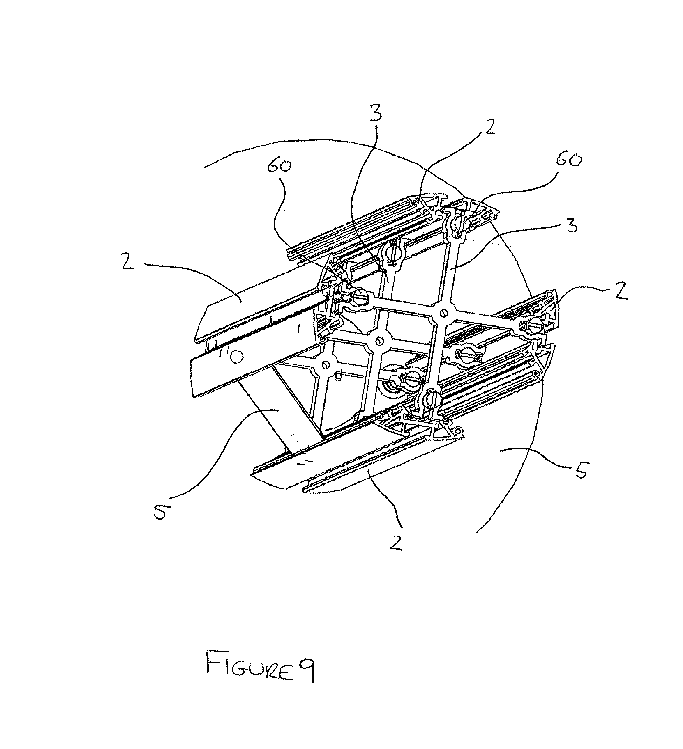

Assembly and operation of the support stand will now be described with reference to Figures 7 to 10. The coupling of a single male coupling portion 47 to a single female coupling portion 73 is described below; however the coupling is repeated for mounting each male portion 47 of each mounting element 3 in each female portion 73.

The biasing member 60 is disposed between the spaced arms 49 of the mounting element 3, such that the cylindrical surface 62 of the biasing member 60 locates against the arcuate walls 54 of the arcuate depressions 53. The biasing member 60 is push fitted between the arms 49 so that it doesn't fall out when the support stand 1 is being assembled to aid assembly thereof. A tool, for example a screwdriver, is inserted in the tool engaging portion 65 of the biasing member 60 to rotate said biasing member so that one end of the threaded bore 63 locates at the alcove opening 52.

The male coupling portion 47 is disposed in the female coupling portion 73 by sliding the flanges 56 at the end of the spaced arms 49 into the respective mounting slots 24 formed in the recess 17. The arms 49 are slid in the recess 17 until the mounting element 3 is in the desired location along the support member 2. The outer face 58 of each flange 56 locates against the recess base 19 and the inner face 57 of each flange 56 locates against the respective mounting lip 22.

A plurality of fixing holes 74 for receiving threaded fasteners 64 are preformed through each upstanding support member 2 at predetermined locations along the upstanding support member 2 between the trough base 14 and the recess base 19. Each fixing hole 74 has a countersunk portion 75 formed in the trough base 14 such that when the threaded fastener 64 is received therein, a head 76 of the threaded fastener 64 is recessed below the surface of the trough base 14, such that components, such as partition panels, may be slid along the trough 11, without impacting threaded fasteners 64 received in said fixing holes 74.

Although in the present embodiment the fixing holes 74 are preformed, it will be understood that in an alternative embodiment the fixing holes 74 are formed during assembly by a user by conventional means in desired positions.

The threaded bore 63 of the biasing member is aligned with a respective fixing hole 74. The threaded fastener 64 is inserted through the fixing hole 74 and is threadingly engaged with the threaded bore 63. A user rotates the threaded fastener 64 using a tool, such as an Allen key, such that the threaded fastener threadingly engages with the threaded bore 63 and the head 76 of threaded fastener 64 is drawn towards into the countersunk portion 75. The biasing member 60 is prevented from rotating as the threaded fastener 64 is rotated as it is disposed between the spaced arms 49.

When the head 76 of the threaded fastener 64 contacts the countersunk portion 75 and the threaded fastener 64 is further rotated, the biasing member 60 is drawn towards the support member 2. The cylindrical surface 62 of the biasing member 60 contacts the converging sections 55 of the arcuate wall 54 of the arcuate depression 53 and so, as the biasing member 60 is further drawn towards the support member 2, the cylindrical surface 62 acts against the converging sections 55 and urges the spaced arms 49 to splay outwardly away from each other. This urges the arms 49 and flanges 56 in a lateral direction, and the flanges 56 are urged towards the upstanding support member 2. Hence, the outer face 58 of the flanges 56 is fixedly held against the recess base 19 and the flange ends 59 and arms 49 are urged against the recess sidewalls 20 and remote end 23 of the mounting lips 22 respectively. The upstanding support member 2 is then fixedly mounted to the mounting element 3 movement and twisting of the support member 2 and mounting element 3 relative to each other is prevented.

Each male coupling portion 47 at the remote end of each radially extending spar 39 of the mounting element 3 is similarly mounted in the female coupling portion 73 of a respective upstanding support member 2. The required number of mounting elements 3 are taken and the operation repeated to affix the support members 2 with the desired number of mounting elements 3. The number of mounting elements 3 required is dependent on the number and weight of the components, for example display devices, to be mounted from the support stand 1.

Although in the above embodiment the biasing member 60 is cylindrical and acts on the arcuate walls 54 of the arcuate depressions 53, it will be understood that the invention is not limited thereto, and that the biasing member and corresponding converging sections 55 of the spaced arms 49 are of any suitable arrangement to splay the arms 49 laterally away from each other. In an alternative embodiment the biasing portion (not shown) is wedge shaped and acts on planar converging sections of the spaced arms.

Once the upstanding support members 2 are mounted to each mounting element 3, the support members 2 are fixedly mounted to the base 4. The upstanding portion 72 of the L-shaped mounting bracket 70 is slid into the recess 17 at the lower end 7of the support member 2. Parallel edges of the upstanding portion 72 locate in the mounting slots 24 of the recess 17 and the fixing aperture (not shown) formed in the upstanding portion 72 is aligned with a fixing hole 75 preformed in the upstanding support member 2. The fixing hole 75 is at a predetermined distance from the lower end 7 of the support member 2 so that when the fixing aperture (not shown) is aligned with said fixing hole 75, the base portion 71 of the L-shaped bracket 70 is aligned with the lower end 7 of the support member 2.

A fixing bolt 78 is disposed through the fixing hole 75 and fixing aperture (not shown) and threadingly engaged with a nut 79 disposed against the upstanding portion 72 of the L-shaped bracket 70. When the fixing bolt 78 is rotated to threadingly engage with the nut 79, the nut is prevented from rotating by an edge of the nut 79 locating against the remote ends 23 of the mounting lips 22, and the L-shaped bracket is securely mounted to the support member 2.

Once an L-shaped bracket 70 is securely mounted to a lower end 7 of each support member 2, the base portion 71 of each L-shaped bracket is fixedly mounted to the base 5 by conventional means, such as a bolt (not shown) threadingly engaging with a threaded section. The support members 2 are then each fixedly mounted to the base 5 and fixedly mounted in spaced relation to each other by the mounting elements 3 and the support stand can be stood in an upright orientation.

The mounting of components to the support stand 2 will now be described with reference to Figures 6, 8 and 9.

Once the upstanding support members 2 and mounting elements 3 are fixedly mounted to each other, the support plate 5 is slid between a pair of adjacent upstanding support members 2. A component 82 to be mounted by the support stand 1 is fixedly coupled to the support plate by known means, for example a display device is coupled to a display device support arm (not shown) which is fixedly coupled to the support plate by a bolt (not shown). Parallel edges 5a of the support plate 5 are slid along the facing guide channels 26 formed in the adjacent support members 2.

A plurality of threaded mounting holes (not shown) are pre-formed in the channel base 29 at predetermined locations along the upstanding support member 2. A threaded grub screw (not shown) is threadingly engagable in the mounting holes such that a rear end of the grub screw extends into the guide channel 26. Therefore, to fixedly locate a support plate 5 which is slid into the guide channels 26 in adjacent support members 2, grub screws are threadingly inserted into receiving mounting holes in the pair of support members 2 at a desired height. Then, as the support plate 5 is slid along the guide channels 26 the edges thereof contact the grub screws (not shown) and fixedly mount the support plate at the desired position. However, in another embodiment any conventional fastening means may be used, for example welding.

The component 82 is then fixedly held in position and supported by the support stand 2 because the support plate 2 is fixedly held in the guide channels 26 and cannot be removed without sliding the support plate 2 to the end of the guide channels 26.

The support plate 5 is securely mounted behind the outer surface 8 of each support member 2 and so it is possible to mount the decorative panel 66, or a plurality of decorative panels 66 between adjacent support members 2, in front of the support plate, such that the support plate is hidden therebebind. An aperture (not shown) may be formed in the decorative panel 66 such that the component 82 or component mount fixedly attached to the support plate 5 extends therethrough.

The decorative panels 66 are mounted to the adjacent upstanding support members 2 by the connecting portions 69, extending from the outer panel face 67 resiliently deforming to clip over the sill ridge portions 35 of the support members 2. The outer panel face 67 conforms to the outer surface 8 of the support members 2 to produce a consistent surface.

In an alternative arrangement, the support plate 5 also has a corresponding secondary mounting plate 83. An aperture (not shown) is formed through each of the support plate 5 and secondary mounting plate 83 and a shaft 84 with a shoulder 84a, mounted to a component mount, extends therethrough and is threadingly engaged at one end to receive a bolt 85. Parallel edges 5a of the support plate 5 are slid into the facing channels 26 and parallel edges 83a of the secondary mounting plate 83 are slid into the secondary channel 34. The support plate 5 is then slid along the guide channels 26 into a desired position and the bolt 85 rotated such that the shaft 84 and bolt 85 are threadingly engaged. The support plate 5 and secondary mounting plate 83 are then urged together by the bolt 85 and the shaft shoulder 84a such that the upright wall 25 dividing the mounting channel 26 and the secondary channel 34 is fixedly mounted therebetween and the component fixedly supported to the support stand 1. Alternatively, the aperture in the support plate 5 is threaded and the shaft 84 threadingly engages with the threaded aperture.

Although in the present embodiment the fixing holes 74 are preformed, it will be understood that in an alternative embodiment the fixing holes 74 are formed during assembly in desired positions by a user by conventional means.

Although one support plate 5 is described above, it will be understood that a plurality of support plates may be mounted to the support stand 1 to support a plurality of components.

Although in the above embodiment the biasing member of the coupling comprises a cylindrical member which acts on the face of the arcuate depression formed in each arm, it will be understood that the arrangement is not limited thereto and that a wedge, or any shape that acts against a pair of converging surfaces on a pair of arms will splay the arms outwardly when it is drawn towards the upstanding member.

Although in the above description the support plate is described with components, such as a display device support arm, mounted thereto, it will be understood that the arrangement is not limited thereto and in another embodiment the support plate is integrally formed with the component, or comprises a pair of support flanges (not shown) extending from the component locatable in the facing guide slots in adjacent support members.

Although embodiments of the invention have been shown and described, it will be appreciated by those skilled in the art that these are preferred embodiments only and that changes may be made to these embodiments, or alternative embodiments are included, within the scope of the invention which is defined in the claims hereafter.

## Claims

1. A coupling for fixedly mounting an upstanding elongate support member to a mounting element, comprising a female portion (73) on a support member (2) with a pair of facing parallel slots (24), a male portion (47) on a mounting element (3) with a pair of opposing arms (49) extending from said mounting element, each arm having a flange (56) configured to be disposed in one of said slots, a biasing member (60) disposed between said arms such that, when the biasing member is drawn towards said support member, the arms splay laterally away from each other to fixedly engage said flanges in said respective slots and **characterised by** a fastening member (64) extendable through said support member to threadingly engage with the biasing member such that, when the fastening member is rotated, the biasing means is drawn towards said support member.

2. A coupling according to claim 1, wherein the arms (49) each comprise a locating surface (55) against which the biasing member (60) acts, said locating surfaces converging inwardly towards the end of the arm.

3. A coupling according to claim 2, wherein each locating surface (55) is arcuate and the biasing member (60) is cylindrical and locates against said arcuate locating surfaces between the arms (49).

4. A system for fixedly mounting components comprising a support stand with a plurality of upstanding elongate support members (2) and a mounting element (3) to fixedly mount the support members to each other in a spaced parallel relationship, and wherein a coupling according to any of claims 1 to 4 fixedly mounts each support member to the mounting element.

## Patentansprüche

1. Kupplung zum starren Montieren eines hochstehenden länglichen Ständerelements an einem Montageelement, umfassend einen aufnehmenden Teil (73) an einem Ständerelement (2) mit einem Paar einander zugewandter paralleler Aussparungen (24), einen Steckteil (47) an einem Montageelement (3) mit einem Paar einander entgegengesetzter Arme (49), die sich von dem genannten Montageelement aberstrecken, wobei jeder Arm einen Flansch (56) hat, der gestaltet ist, um in einer der genannten Aussparungen angeordnet zu werden, ein Vorspannelement (60), das zwischen den genannten Armen angeordnet ist, so dass, wenn das Vorspannelement zu dem genannten Ständerelement hin gezogen wird, die Arme sich in seitlicher Richtung auseinanderspreizen, um die genannten Flansche starr in den genannten Aussparungen in Eingriff zu bringen, und **gekennzeichnet durch** ein Befestigungselement (64), das **durch** das genannte Ständerelement geführt werden kann, um mit dem Vorspannelement in Gewindeeingriff zu kommen, so dass, wenn das Befestigungselement gedreht wird, das Vorspannmittel zu dem genannten Ständerelement hin gezogen wird.

2. Kupplung nach Anspruch 1, wobei die Arme (49) jeweils eine Passfläche (55) aufweisen, gegen die das Vorspannelement (60) wirkt, wobei die genannten Passflächen sich zum Ende des Armes hin einwärts näher kommen.

3. Kupplung nach Anspruch 2, wobei jede Passfläche (55) bogenförmig ist und das Vorspannelement (60) zylindrisch ist und an den genannten bogenförmigen Passflächen zwischen den Armen (49) anliegt.

4. System zum starren Montieren von Bauteilen, das einen Tragständer mit mehreren hochstehenden länglichen Ständerelementen (2) und ein Montageelement (3) zum starren Montieren der Ständerelemente aneinander in einer beabstandeten parallelen Beziehung aufweist, und wobei eine Kupplung nach einem der Ansprüche 1 bis 4 jedes Ständerelement starr an dem Montageelement montiert.

## Revendications

1. Accouplement permettant un montage fixe d'un élément de support allongé vertical sur un élément de montage, comportant une partie femelle (73) sur un élément de support (2) ayant une paire de rainures parallèles orientées l'une vers l'autre (24), une partie mâle (47) sur un élément de montage (3) ayant une paire de bras opposés (49) s'étendant depuis ledit élément de montage, chaque bras ayant une bride (56) configurée pour être disposée dans l'une desdites rainures, un élément de sollicitation (60) disposé entre lesdits bras de telle sorte que, quand l'élément de sollicitation est attiré vers ledit élément de support, les bras vont en s'évasant dans le sens latéral à l'opposé l'un par rapport à l'autre pour se mettre en prise de manière fixe avec lesdites brides dans lesdites rainures respectives et **caractérisé par** un élément de fixation (64) en mesure de s'étendre au travers dudit élément de support pour se mettre en prise par filetage avec l'élément de sollicitation de telle sorte que, quand l'élément de fixation est mis en rotation, le moyen de sollicitation est attiré vers ledit élément de support.

2. Accouplement selon la revendication 1, dans lequel les bras (49) comportent chacun une surface de positionnement (55) contre laquelle l'élément de sollicitation (60) agit, lesdites surfaces de positionnement convergeant vers l'intérieur vers l'extrémité du bras.

3. Accouplement selon la revendication 2, dans lequel chaque surface de positionnement (55) est arquée et l'élément de sollicitation (60) est cylindrique et se positionne contre lesdites surfaces de positionnement arquées entre les bras (49).

4. Système permettant un montage fixe de composants comportant un pied de support ayant une pluralité d'éléments de support allongés verticaux (2) et un élément de montage (3) à des fins de montage fixe des éléments de support les uns par rapport aux autres en une relation parallèle espacée, et dans lequel un accouplement selon l'une quelconque des revendications 1 à 4 permet un montage fixe de chaque élément de support sur l'élément de montage.
